# EUROPÄISCHE PATENTANMELDUNG

(11) **EP 3 300 215 A1**
(43) Veröffentlichungstag der Anmeldung: **28.03.2018**
(21) Anmeldenummer: 16189919.0
(22) Anmeldetag: 21.09.2016
(51) Int. Cl.: H02K 1/26, H02K 3/24

(54) **ANORDNUNG ZUR KÜHLUNG EINER DYNAMOELEKTRISCHEN MASCHINE**

(71) Anmelder: Siemens Aktiengesellschaft, 80333 München (DE)
(72) Erfinder: Kowalski, Matthias, 45478 Mülheim an der Ruhr (DE); Lehmann, Christoph, 47506 Neukirchen-Vluyn (DE)

(57) **Zusammenfassung**

Die Erfindung betrifft eine Anordnung zur Kühlung einer dynamoelektrischen Maschine, wobei der Nutgrundkanalquerschnitt (41) im Bereich einer ersten Kühlleitung (12) verjüngt ist.

## Beschreibung

Die Erfindung betrifft eine Anordnung zur Kühlung einer dynamoelektrischen Maschine.

Aufgabe der Erfindung ist es eine verbesserte Möglichkeit anzubieten, die Rotorwicklung einer dynamoelektrischen Maschine zu kühlen.

Dynamoelektrische Maschinen wie beispielsweise Turbogeneratoren weisen im Wesentlichen einen um eine Rotationsachse drehbar gelagerten Rotor auf, der eine Rotorwicklung umfasst sowie einen um den Rotor angeordneten Stator, der eine Statorwicklung umfasst. Im Betrieb strömt ein Gleichstrom durch die Rotorwicklung, was zu einem magnetischen Feld führt. Die Ströme durch die Rotorwicklung sind bei den heutigen Turbogeneratoren vergleichsweise hoch, was zur Erzeugung von Wärme führt und somit zu einer Erhöhung der Rotorwicklungstemperatur führt. In der Regel existiert ein Temperaturgrenzwert, der im Betrieb nicht überschritten werden sollte. Damit dieser Grenzwert nicht überschritten wird, wird der Rotor aktiv gekühlt. Hierzu wird unter der Rotorwicklung ein Kanal ausgebildet, durch den ein Kühlmedium strömen kann. Durch das Auftreten von in radialer Richtung wirkenden Kräften aufgrund der Rotation des Rotors erfolgt eine Förderwirkung, so dass das Kühlmedium aus diesem Nutgrundkanal durch radiale Schlitze in der Rotorwicklung nach außen zu einem Luftspalt hin austreten kann. Somit kann das Kühlmedium unmittelbar entlang der Rotorwicklung geführt werden und somit die Verlustwärme abtransportieren.

Allerdings wird der Kühlmediumstrom in Richtung Ballenmitte geringer, was zwangsläufig zu einer Verlangsamung der Kühlmediumströmung im Nutgrundkanal führt. Dies führt dazu, dass die Strömungsgeschwindigkeiten des Kühlmediums am Eintritt des Nutgrundkanals vergleichsweise hoch sind. Allerdings führen hohe Geschwindigkeiten am Anfang des Nutgrundkanals zu einem hohen dynamischen Druck und dadurch zu einem niedrigen statischen Druck. Mit einem geringen statischen Druck in diesem Bereich des Nutgrundkanals ist die Druckdifferenz zwischen dem Luftspalt und dem Nutgrundkanal zu gering um einen genügend starken Kühlmediumstrom zu erzeugen. Die Folge ist, dass vor allem der erste Radialschlitz in der Rotorwicklung mit einem vergleichsweise geringeren Massenstrom mit Kühlmedium versorgt wird und dementsprechend auch der Bereich des Rotorkupfers unterhalb des Schrumpfsitzes, wo keine Kühlschlitze angeordnet werden können, schlecht gekühlt wird. Andererseits sollte besonders der erste Radialschlitz der Rotorwicklung gut gekühlt werden, da der angrenzende Bereich unterhalb des Schrumpfsitzes der Läuferkappe auch durch diesen gekühlt werden soll. Da die Grenztemperatur die Leistung des gesamten Generators limitiert, ist es wünschenswert vor allem den ersten Kühlschlitz besser mit Kühlmedium zu versorgen.

Der erste radiale Kühlschlitz ist in der Nähe der Rotorstirn angeordnet und unterhalb des Kappenrings ausgebildet. Die Auslassbohrung im Keil ist geschrägt, so dass das Kühlmedium in den Luftspalt austreten könnte. Dennoch wird eine gute Kühlung verhindert, da die Strömungsgeschwindigkeiten sehr hoch sind, was auf den kleinen statischen Druck im Nutgrundkanal zurückzuführen ist.

Gelöst wird diese Aufgabe durch eine Anordnung gemäß Anspruch 1.

Mit der Erfindung wird vorgeschlagen, den Kühlmediumstrom durch die erste Kühlleitung zu erhöhen und folglich die Rotorwicklung vor allem im Bereich unterhalb des Schrumpfsitzes besser zu kühlen.

Anstatt den Druck im Bereich des Nutgrundkanals zu steigern, um eine höhere Druckdifferenz zwischen Luftspalt und Nutgrundkanal zu gewinnen, wird der Druck derart abgesenkt, dass dieser deutlich unterhalb des Luftspaltdruckes ist und folglich Kühlmedium durch den Radialschlitz einsaugt. Hierzu wird die Druckdifferenz der Förderwirkung durch die Rotation des Läufers übertroffen. Diese Druckabsenkung kann durch eine Steigerung der Geschwindigkeit des Kühlmediums im Nutgrundkanal erreicht werden.

Erfindungsgemäß wird daher vorgeschlagen, in den Nutgrundkanal eine lokale Verkleinerung des Nutgrundkanalquerschnitts im Bereich des ersten radialen Kühlschlitzes einzubringen. Der Nutgrundkanal wird dadurch im Strömungsquerschnitt verjüngt. Das Resultat hieraus ist, dass der dynamische Druck lokal ansteigt, was zu einem Abfall des statischen Druckes führt. Daraus resultiert ein statisches Druckgefälle vom Luftspalt zum Nutgrundkanal, was das Einsaugen des Kühlungsmediums nach sich zieht. Das Kühlungsmedium wird somit aus dem Luftspalt in die Kühlleitung eingezogen und strömt in Richtung des Nutgrundkanals. Das Einströmen durch die Kühlleitung führt zu einer konvektiven Kühlung der Rotorwicklung im kappennahen Bereich. Dieses Prinzip ist auch als Venturidüse bzw. Venturirohr beschreibbar.

In den Unteransprüchen sind vorteilhafte Weiterbildungen angegeben.

Die Unteransprüche können in beliebiger Weise miteinander kombiniert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet. Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: eine schematische Darstellung eines Teils des Rotors,
- Figur 2: eine stirnseitige Ansicht des Rotors,,
- Figur 3: eine Querschnittsansicht eines Teils der Rotorwicklung,
- Figur 4: eine schematische Darstellung der Strömungsverhältnisse,
- Figur 5: eine weitere schematische Darstellung der Strömungsverhältnisse,
- Figur 6: eine weitere schematische Darstellung der Strömungsverhältnisse,
- Figur 7: perspektivische Ansicht der Erfindung,
- Figur 8: eine weitere perspektivische Ansicht der Erfindung.

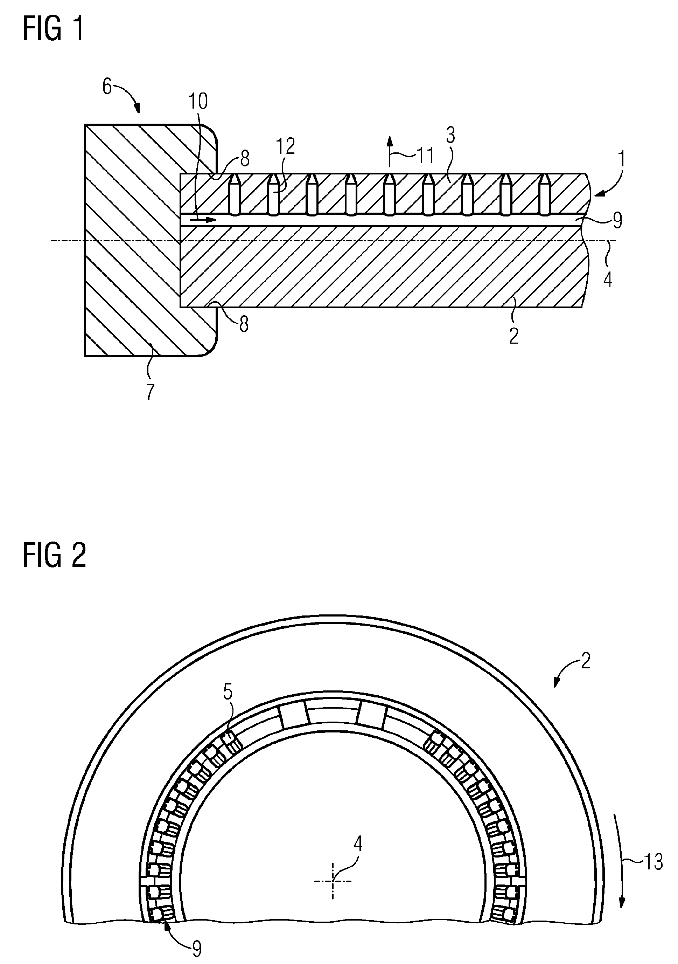

Die Figur 1 zeigt eine Ansicht eines Teils einer Rotorwicklung 1, die in einem Rotor 2 einer dynamoelektrischen Maschine, wie beispielsweise einem Turbogenerator angeordnet ist. Die Rotorwicklung 1 umfasst einen Leiterstab 3, der in einer Rotationsachsenrichtung 4 länglich ausgebildet ist und in Nuten 5 eingebracht wird. An einem stirnseitigen Ende 6 ist eine Läuferkappe 7 angeordnet, die über einen Schrumpfsitz 8 mit dem Rotor 2 fest verbunden ist. Die Kühlung der Rotorwicklung 1 erfolgt folgendermaßen: über einen Nutgrundkanal 9 strömt ein Kühlmedium von dem stirnseitigen Ende 6 in Richtung Rotormitte (nicht dargestellt). Die Strömungsrichtung 10 des Kühlmediums erfolgt hierbei von links nach rechts. Das Kühlmedium kann beispielsweise Luft, Stickstoff oder Wasserstoff sein. Desweiteren weist die Rotorwicklung 1 in radialer Richtung 11 angeordnete Kühlleitungen 12 auf. Aus Gründen der Übersichtlichkeit ist in der Figur 1 lediglich eine Kühlleitung mit dem Bezugszeichen 12 versehen. Die Kühlleitung 12 ist gemäß Figur 1 als eine erste Kühlleitung ausgebildet und somit eine Kühlleitung, die gegenüber dem Stand der Technik verbessert gekühlt werden sollte. Die Rotorwicklung 1 ist charakterisiert durch eine erste Kühlleitung 12a, an der die Strömungsverhältnisse gegenüber den weiteren Kühlleitungen unterschiedlich sind.

Die Figur 2 zeigt einen Teil des Rotors 2. In einer Umfangsrichtung 13 sind mehrere Nutgrundkanäle 9 ausgebildet. Durch diese Nutgrundkanäle 9 strömt im Betrieb ein Kühlmedium. Aus Gründen der Übersichtlichkeit ist lediglich ein Nutgrundkanal mit dem Bezugszeichen 9 versehen. Desweiteren ist aus Gründen der Übersichtlichkeit nur eine Nut mit dem Bezugszeichen 5 versehen.

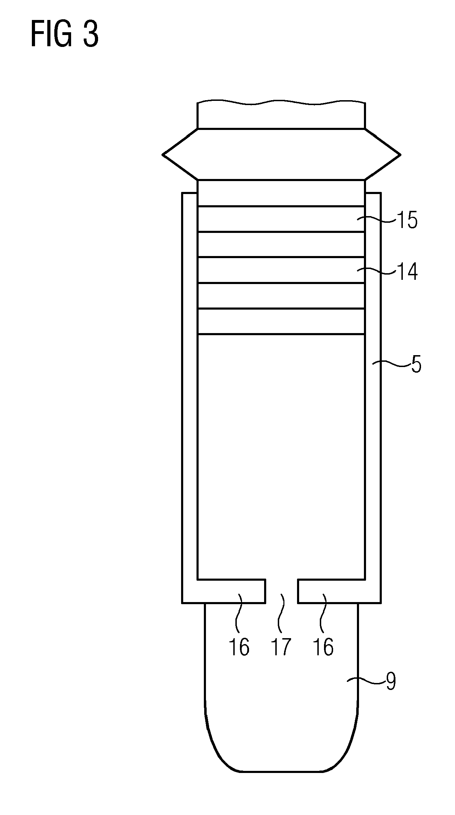

Die Figur 3 zeigt eine vergrößerte Ansicht eines Teils des Rotors 3. In der Nut 5 ist ein Leiter 14, der einen Teil der Rotorwicklung 1 darstellt, angeordnet. Der Leiter 14 umfasst übereinander angeordnete Kupferstäbe 15. Aus Gründen der Übersichtlichkeit ist lediglich ein Kupferstab mit dem Bezugszeichen 15 versehen und außerdem sind nicht alle Kupferstäbe dargestellt. Die Nut 5 wird durch Nutverschlusskeile 16 begrenzt, die am unteren Ende 19 eine Grenze darstellen zu dem Nutgrundkanal 9. Zwischen den Nutverschlusskeilen 16 sind Kühlschlitze 17 angeordnet, die die Möglichkeit schaffen eine strömungstechnische Verbindung zwischen dem Nutgrundkanal 9 und einer radialen Kühlleitung in der Rotorwicklung (in Figur 3 nicht dargestellt) zu ermöglichen.

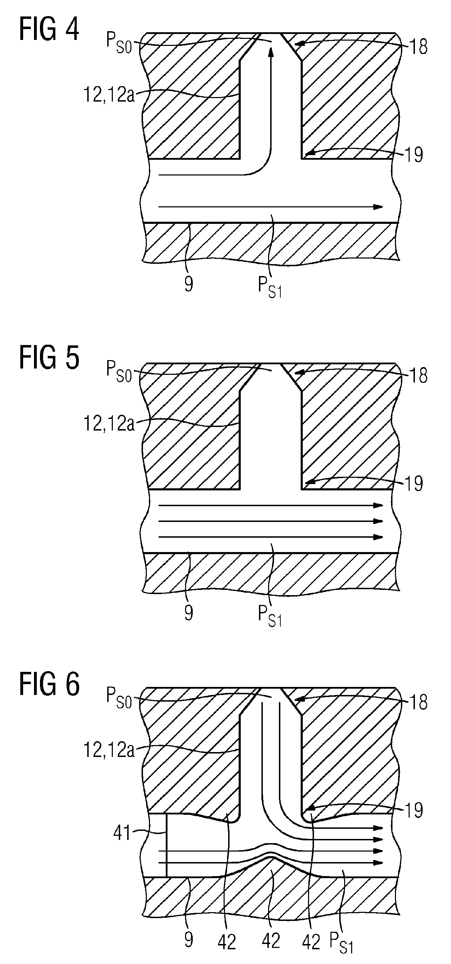

Die Figur 4 stellt eine schematische Ansicht dar, um die Druck- und Strömungsverhältnisse zwischen dem Nutgrundkanal 9 und der Kühlleitung 12 bzw. 12a darzustellen. Am oberen Ende 18 der Kühlleitung 12 bzw. 12a herrscht der Druck Pₛ₀. Am unteren Ende 19 herrscht der Druck Pₛ₁. Eine gute Kühlwirkung wird erreicht, wie in Figur 4 zu sehen ist, wenn der Druck Pₛ₀ kleiner ist als der Druck Pₛ₁ am unteren Ende 19 (Pₛ₀ < Pₛ₁). Eine Darstellung einer vergleichsweise schlechteren Kühlung ist in der Figur 5 zu sehen, bei der die Druckverhältnisse folgendermaßen aussehen: dort ist der Druck Pₛ₀ im Wesentlichen gleich dem Druck Pₛ₁ (P_{S0} ≈ P_{S1}). Gut zu erkennen ist gemäß der Figur 5, dass die Strömung so gut wie gar nicht an das obere Ende 18 gelangt.

Figur 6 zeigt die Strömungsverhältnisse, wenn der Nutgrundkanalquerschnitt 41 im Bereich der ersten Kühlleitung 12a verjüngt wird. Dadurch erfolgt eine Strömung vom oberen Ende 18 an das untere Ende 19. Dadurch erfolgt eine verbesserte Kühlung im Bereich der ersten Kühlleitung.

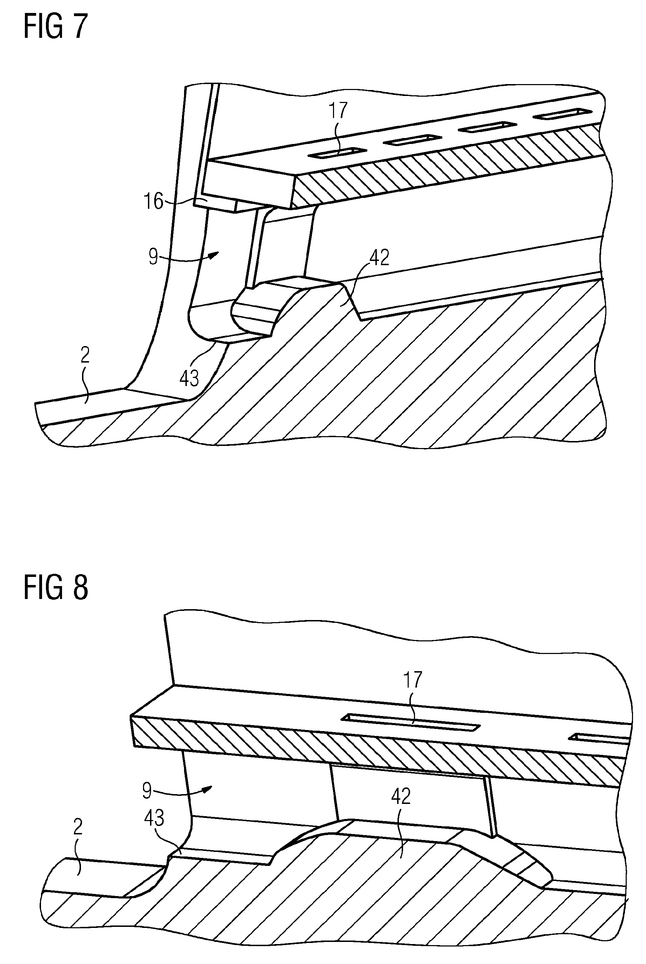

Die Figur 7 zeigt eine perspektivische Ansicht der Erfindung. Der Nutgrundkanal wird im Bereich der ersten Kühlleitung (nicht dargestellt) derart gefräst, dass der Querschnitt verjüngt wird. Dazu wird eine Erhebung 42 am unteren Ende 43 des Nutgrundkanals 9 angeordnet. Die Erhebung 42 ist hierbei vergleichsweise symmetrisch und verjüngt den Nutgrundkanalquerschnitt 41.

In der Figur 8 ist eine weitere perspektivische Darstellung des Nutgrundkanalquerschnitts 41 mit der Erhebung 42 dargestellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung zur Kühlung einer dynamoelektrischen Maschine, wobei die Anordnung einen um die Rotationsachse (4) drehbar gelagerten Rotor (2) mit einer Rotorwicklung (1) umfasst, wobei die Rotorwicklung (1) entlang der Rotationsachse (4) angeordnete Laufstäbe umfasst,
wobei der Rotor (2) Nuten (5) aufweist, in die die Leiterstände (3) angeordnet sind,
wobei die Nut (5) derart ausgebildet ist, dass zwischen dem Leiterstab (3) und der Nut (5) in radialer Richtung (11) gesehen ein Nutgrundkanal (9) ausgebildet ist,
wobei die Rotorwicklung (1) Kühlleitungen (12) aufweist, die im Wesentlichen in radialer Richtung (11) angeordnet sind,
wobei die Nut (5) Nutseitenwinkel aufweist, die eine untere Begrenzung der Nut (5) darstellen,
wobei zwischen den Nutseitenwinkeln ein Kühlschlitz (17) ausgebildet ist,
wobei der Nutgrundkanal (9) durch die Nutseitenwinkel in radialer Richtung (11) begrenzt ist,
**dadurch gekennzeichnet, dass**
vor dem Kühlschlitz (17) der Nutgrundkanal (9), ein erster Nutgrundkanalquerschnitt (41) und im Bereich des Kühlschlitzes (17) ein zweiter Nutgrundkanalquerschnitt (41) angeordnet ist,
wobei der zweite Nutgrundkanalquerschnitt (41) kleiner ist als der erste.

2. Anordnung nach Anspruch 1,
wobei nach dem Kühlschlitz (17) der Nutgrundkanal (9) einen dritten Nutgrundkanalquerschnitt (41) aufweist, wobei der dritte Nutgrundkanalquerschnitt (41) größer ist als der zweite Nutgrundkanalquerschnitt (41).

3. Anordnung nach Anspruch 1 oder 2,
wobei der Nutgrundkanal (9) eine gegenüber dem Nutseitenwinkel angeordneten Nutgrundkanalfläche aufweist und die Verjüngung des Nutgrundkanalquerschnitts (41) durch Materialanhäufung an der Nutgrundkanalfläche erfolgt.

4. Anordnung nach einem der vorhergehenden Ansprüche,
wobei die Verjüngung des Nutgrundkanalquerschnittes (41) durch Materialanhäufung an den Seitenwänden des Nutgrundkanals (9) erfolgt.

5. Anordnung nach einem der vorhergehenden Ansprüche,
wobei mehrere in Rotationsachsenrichtung angeordnete Kühlschlitze (17) ausgebildet sind und die Verjüngung des Nutgrundkanalquerschnitts (41) am ersten Kühlschlitz (9) von einem stirnseitigen Ende des Rotors (2) gesehen erfolgt.
